Europäisches Patentamt

(19) European Patent Office

Office européen des brevets

(11) Publication number : **0 234 836 B1**

# (12) EUROPEAN PATENT SPECIFICATION

(45) Date of publication of patent specification :
03.04.91 Bulletin 91/14

(21) Application number : 87301328.8

(22) Date of filing : 17.02.87

(51) Int. Cl.⁵ : **G01N 27/26, B01D 57/02**

(54) Pulsed-field gradient gel electrophoretic apparatus.

The file contains technical information
submitted after the application was filed and
not included in this specification

(30) Priority : 27.02.86 US 833691
03.02.87 US 5278

(43) Date of publication of application :
02.09.87 Bulletin 87/36

(45) Publication of the grant of the patent :
03.04.91 Bulletin 91/14

(84) Designated Contracting States :
**DE FR GB IT SE**

(56) References cited :
WO-A-84/02001
US-A- 4 148 703

(56) References cited :
METHODS IN ENZYMOLOGY, vol. 91, 1983,
pages 227-236, Academic Press Inc.; M.W.
HUNKAPILLER et al.: "Isolation of microgram
quantities of proteins from polyacrylamide
gels for amino acid sequence analysis"
PATENT ABSTRACTS OF JAPAN, vol. 10, no.
198 (P-476)[2254], 11th July 1986 & JP-A-61-41
957

(73) Proprietor : UNIVERSITY PATENTS, INC.
1465 Post Road East, P.O. Box 901
Westport, Connecticut 06881 (US)

(72) Inventor : Gardiner, Katheleen J.
970 Marion Apartment 24
Denver Colorado 80218 (US)
Inventor : Laas, William A.
1850 Sacramento Street No. 201
San Francisco California 94109 (US)
Inventor : Patterson, David
4090, South Narcissus Way
Denver Colorado 80237 (US)

(74) Representative : Allam, Peter Clerk et al
LLOYD WISE, TREGEAR & CO. Norman House
105-109 Strand
London WC2R 0AE (GB)

## Description

This invention relates to pulsed-field electrophoretic systems.

Recently, electrophoretic systems have made possible the resolution of large DNA molecules. These systems, in essence, repetitively alter the field direction applied to a gel containing the DNA molecules. This alteration of the field direction separates the molecules because the molecules, depending upon their molecular weight (or contour length), vary in the amount of time required to change direction.

Representative prior art electrophoretic systems are disclosed in US-A-4148703 and WO-A-84/02001. The apparatus of these prior systems comprises a gel matrix medium for supporting the macromolecular particles to be separated, which is of planar configuration having first and second opposed planar surfaces separated by a thickness of medium which is small in relation to the dimension of the planar surfaces, and defines a plurality of separation tracks parallel to the planar surfaces. First and second electrode means are positioned adjacent to the gel matrix medium for applying, upon energization, first and second electric fields, respectively, to the separation tracks of the matrix. Means are provided for alternately and repetitively energizing the first and second electrode means.

In these prior art systems, the first and second electrodes are positioned relatively to the gel matrix, so that the two electric fields are applied in directions parallel to the planar surfaces of the gel and orthogonally with respect to each other. As a result, the separation lanes are not subjected to equivalent electric fields, with the consequence that the particles being separated do not follow linear, well-defined paths but instead progressively fan out towards the ends of the paths, making it difficult to "read" the separation tracks and preventing efficient use of the area of the gel matrix.

It is an object of this invention to avoid the difficulties of these prior systems by providing a pulsed-field gradient, gel electrophoretic apparatus and method wherein all separation lanes are exposed to equivalent field strengths and orientations. In this way, it becomes possible to achieve separation lanes which are easily readable, wherein the molecules being separated follow a linear and well defined path, and in which there is an increased resolution of the molecules within each separation lane. A further feature of preferred embodiments of the present apparatus is that it may also be readily adapted to transfer molecules from their separation lanes onto a substrate.

The electrophoretic separation apparatus in accordance with the present invention comprises a gel matrix medium for supporting macromolecular particles to be separated. The medium is of planar configuration, having first and second opposed planar surfaces separated by a thickness of medium which is small in relation to the dimensions of the planar surfaces, and defines a plurality of separation tracks parallel to the planar surfaces. The gel matrix is preferably free standing.

First and second electrode means are positioned adjacent to the gel matrix medium for applying, upon energization, first and second electric fields, respectively, to the separation tracks of the matrix. Further, means are provided for alternately and repetitively energizing the first and second electrode means.

The apparatus of this invention is characterized in that the first electrode means is positioned in facing relation to the opposed planar faces of the gel matrix medium for applying the first electrode field across the separation tracks of the matrix in a direction which intersects both of the planar surfaces of the matrix and is oriented at an angle which is acute with respect to the first planar surface. Similarly, the second electrode means is positioned in facing relation to the opposed planar surfaces of the gel matrix medium by applying the second electric field across the separation tracks of the medium in a direction which intersects both the planar surfaces of the medium and is oriented at an angle which is acute with respect to the second planar surface.

With this arrangement, in which three dimensional fields are applied across the face of the gel matrix medium, rather than in the plane of the medium as in the prior art systems referred to above, the separation lanes can be exposed simultaneously to equivalent field strengths and orientations which cause the macromolecular particles to proceed down the lanes in the matrix in a generally saw-tooth manner oscillating between the planar surfaces thereof.

The three dimensional fields preferably are arranged at included angles of 90° or greater to one another, the maximum fields intersecting the upper end of a free standing gel to achieve excellent resolution of the molecules.

For efficient collection of the molecules following separation, the preferred embodiments of the present invention provide transfer electrodes which may be substituted for the gel run electrodes and, using the same source of power as for the gel run electrodes, are capable of transferring the molecules from the gel on to a separate substrate.

The electrophoretic separation method of the present invention, for separating macromolecular particles by alternately and repetitively applying first and second electric fields in different directions to a planar gel matrix to which macromolecular particles to be separated have been applied so as to be separated in a plurality of separation tracks running parallel to the gel matrix, is characterized in that the first electric field is applied across the separation tracks in a direction which intersects both planar surfaces of the gel matrix and is oriented at an angle which is acute with respect to one of the planar surfaces of the gel matrix, and is further characterized in that the second electric field is applied across the separation tracks in a direction which intersects both planar surfaces of the gel matrix and is oriented at an angle which is acute with respect to the other of the planar surfaces of the gel matrix. In this way, an equivalent electric field is applied to each of the separation tracks simultaneously, and the advantages discussed above in relation to the apparatus aspects of the invention can be realised.

The invention will now be particularly described, by way of example, with reference to the accompanying drawings in which :

Figure 1 is a cross-sectional view of electrophoretic separation apparatus according to one embodiment of the invention ;

Figure 2 is a sectional view taken along line AA of Figure 1 ;

Figure 3 is a cross-sectional view of a second embodiment of the invention ;

Figure 4 is a top plan view of the embodiment shown in Figure 3 ;

Figure 5 is a cross-sectional view showing an array of transfer electrodes usable in the second embodiment ;

Figure 6 is a top plan view of the transfer electrodes ;

Figure 7 is an isometric view of the insert assemblies for the gel run electrodes of the second embodiment ; and

Figure 8 is an isometric view of the insert assemblies for the transfer electrodes usable in the second embodiment.

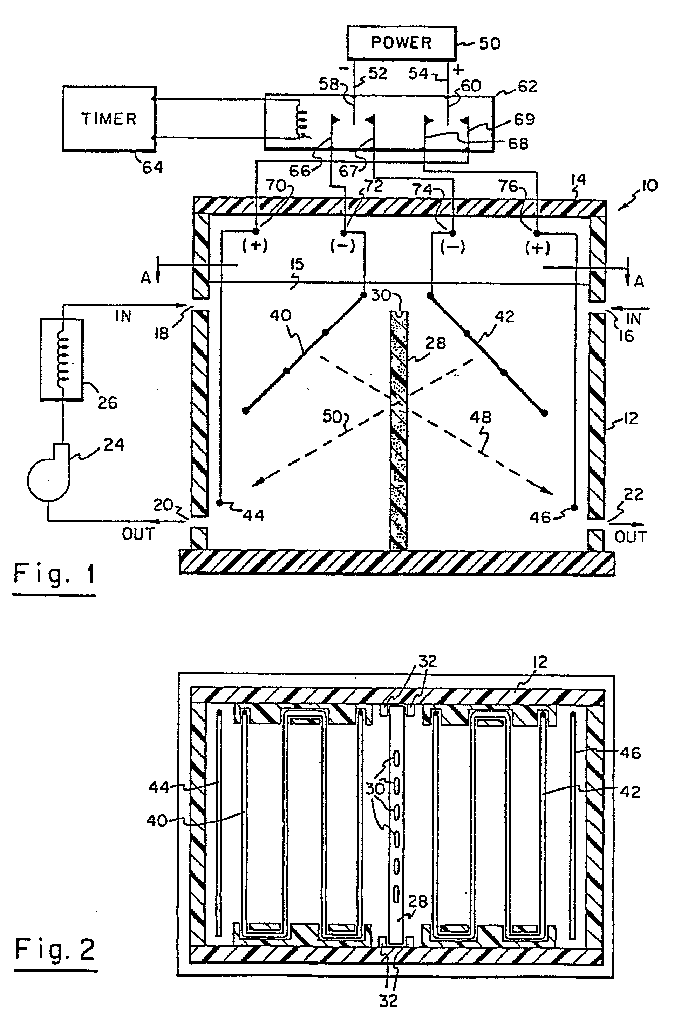

In Figure 1 and 2, electrophoretic apparatus 10 is housed within gel box 12, the top portion 14 of which is readily removable. Apparatus 10 is filled with buffer 14 and is provided with buffer inlets 16 and 18 and buffer outlets 20 and 22. Both buffer outlets 20 and 22 feed to a pump 24 and into a refrigerated waterbath and heat exchanger 26. From there, cooled buffer 15 is recirculated back into gel box 12.

Electrophoretic gel 28 is self-supporting and is provided with a plurality of wells 30. Gel 28 is produced by casting it between glass plates, and, after cooling, the plates are removed and the gel is positioned vertically in gel box 12. It is supported within slots formed between two posts 32 on the inner surfaces of box 12 (see Figure 2). A 1% agarose gel is sturdy enough to stand upright in the slots without supporting plates.

Electric fields are generated in alternating directions and at acute angles through the faces of gel 28 by two equivalent arrays of platinum wire electrodes 40, 46 and 42, 44. Electrodes 40 and 42 are each formed from a single length of platinum wire strung back and forth in shoe lace fashion to create four exposed horizontal stretches of wire. The intervening segments of wire are covered by short pieces of tubing which act as insulating shields. In Figure 1, the planes of electrodes 40 and 42 are approximately at right angles with respect to each other and are oriented orthogonally to electrodes 46 and 44, respectively. The application of opposite voltages between electrodes 40 and 46 will create a three dimensional field through the gel 28 in the direction indicated by arrow 48. A similar field 50 will be created by the proper energization of electrodes 42 and 44 and all of the gel lanes in gel 28 are exposed to equivalent electrical fields so that samples in wells 30 move straight down the lanes.

Power supply 50 has negative and positive output lines 52 and 54 connected to armatures 58 and 60 of double pole, double throw relay 62. The position of armatures 58 and 60 is controlled by switching timer 64 which is connected to the coil within relay 62. When the output from timer 64 is energized, relay armatures 58 and 60 connect to contacts 66 and 68 which apply negative and positive potentials via terminals 72 and 76 to electrodes 40 and 46 respectively. When the output from timer 64 is deenergized, armatures 58 and 60 connect to contacts 67 and 69 causing negative and positive potentials to be applied via contacts 74 and 70 respectively to electrodes 42 and 44.

With gel 30 precisely centered in box 12, and the electrode pairs delivering equivalent pulses of electrical charge for equal amounts of time, the net effect is for the samples being separated to move from the top to the bottom of gel 28. The alternation of the field direction brings about the separation of large DNA molecules.

The above apparatus has been constructed and operated successfully. The system employed : an ISCO Model 493 Power Supply ; a double-pole, double-throw relay activated by a Gray Lab Model 625 Timer ; a buffer recirculation and cooling system consisting of an oscillating pump (Cold-Parmer), a refrigerated water bath (Lauda Model RM 6), and a heat exchanger made of two twelve foot (3-66 m) loops of polyethylene tubing (1/4" 0.64 cm) that were coiled side by side and submerged in a water filled styrofoam box. One loop circulated coolant between the water bath and the box, and the other loop circulated buffer between the heat exchanger box and the gel chamber. The gel box was constructed from 1/4" (0.64 cm) clear plexiglass sheet and had internal dimensions of 6" × 3" × 6.5" (15.2 cm × 7.6 cm × 16.5 cm). The agarose gel dimensions were 7.6 cm wide by 10 cm tall by 0.64 cm thick. A 1% gel was employed. The platinum wire was 28 gauge.

A feature of this invention is that the electric field is caused to pass through the thickness of the gel rather than through its planar dimension as in prior art designs, thereby allowing each lane to be exposed to identical field strengths with the movement of separated components being strictly contained within the gel lanes. The frequency of alteration of field direction determines the size and class of molecules to be resolved. For most applications involving fragments from 200 to 2000 kilobases, pulse times of 40 to 60 seconds were used.

To alter the field strength profiles along the separation lanes, both electrode 40 and 42 may fit concave or covex curvatures so that as sample components traverse down the length of the gel, they will enter regions of gradually decreasing field strengths. While electrode arrays 40 and 42 are shown in a fixed orientation, they may be made movable to allow the choice of a spectrum of angles of intersection of the electric fields. Additionally, while gel 28 is shown free standing, it may be cast within a frame, movable in the gel box so that the gel can be repositioned with respect to the electrodes at intervals during the separation procedure. The electrodes 40 and 42 may focus the electrical field on a smaller select region of the gel and the gel would be moved vertically through the intersecting fields by a variable speed mechanical drive mechanism such that the gel would be exposed to the fields a portion at a time. This allows the separation to be optimized by enabling selection of a range of voltages, pulse times and drive speeds. In such an arrangement, electrodes 40 and 42 (and 44 and 46) could be made movable while gel 28 is fixed.

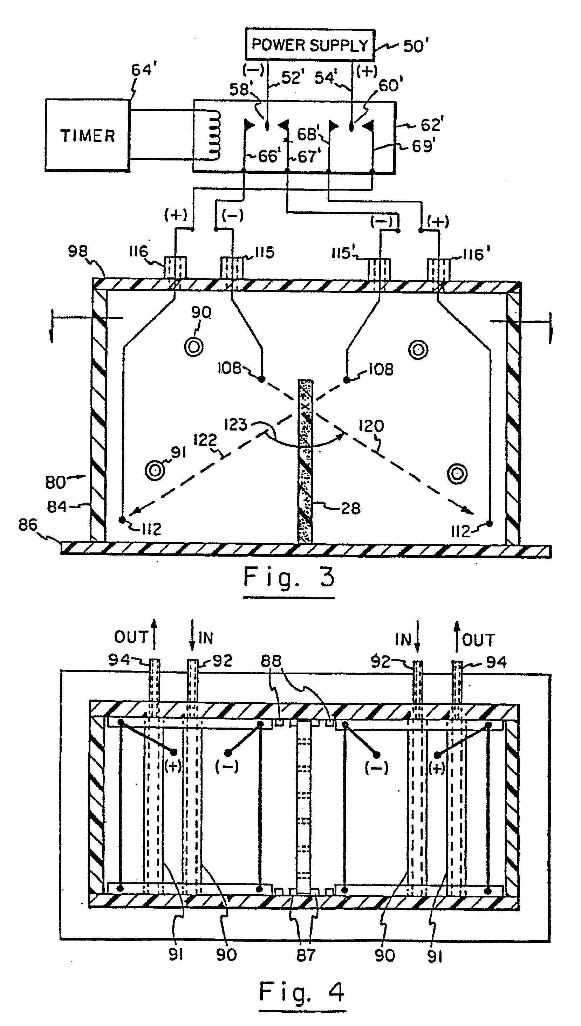

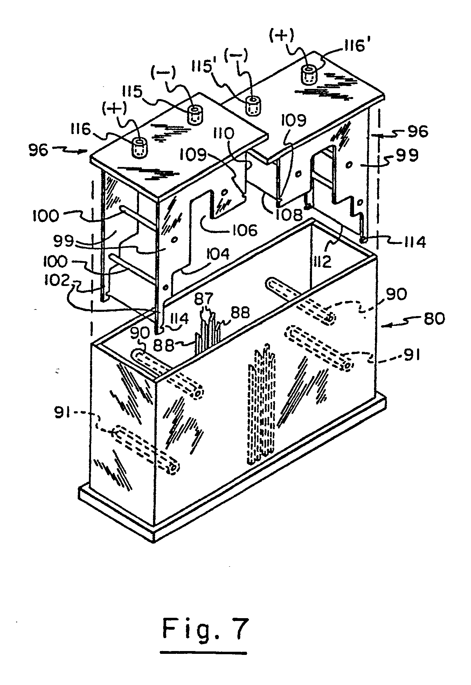

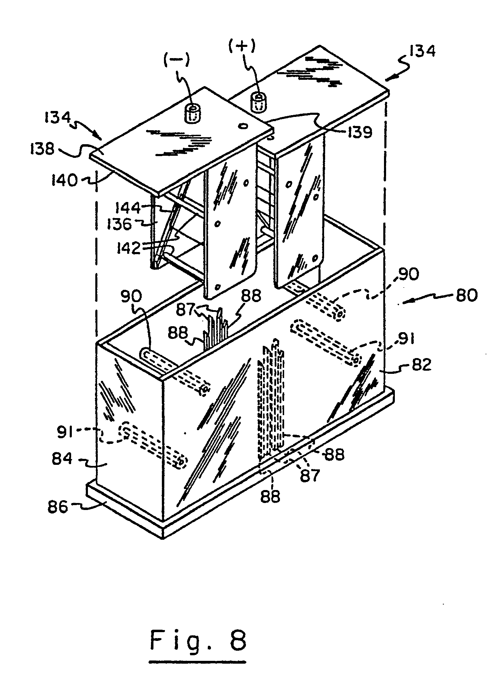

An alternative form of invention is illustrated in Figures 3 to 8 wherein a gel box 80 is of elongated rectangular configuration having opposite sidewalls 82, opposite end walls 84 and a base 86. First pairs of inner posts 87 intrude from opposite sidewalls 82 in aligned relation to one another, the inner posts 87 on each sidewall disposed in closely spaced, facing relation to one another for insertion of a self-supporting gel medium 28 within the slots formed between the inner posts 87 in the same manner as described with reference to Figures 1 and 2. In Figures 7 and 8, second pairs of outer posts 88 protrude inwardly from opposite sidewalls in aligned relation to one another, the outer posts 88 being somewhat shorter than the inner posts 87 and spaced apart a distance to accommodate placement of the gel 28 during the transfer process.

The gel housing 80 is open at its upper end, and upper and lower buffer circulation perforated tubes 90 and 91 extend between opposite sidewalls 82 and are arranged symmetrically on either side of the posts 87 and 88. As shown in Figures 3 and 4, buffer inlets 92 communicate with the upper ports 90 and lower buffer outlets 94 communicate with the lower ports 91. As in Figures 1 and 2, a refrigerated water bath and heat exchanger are arranged in a closed circulation system with the buffer inlets 92 and outlets 94 for recirculation of a buffer solution through the housing in order to maintain a constant temperature of the buffer solution within the housing 80. In order to subject the gel 28 to alternating pulse fields, a pair of gel run insert assemblies 96 are removably inserted into the common housing 80, as in Figure 7. Each insert assembly correspondingly includes a top 98, a pair of downwardly directed, spaced sidewalls 99 which extend from the undersurface of the top 98, and a pair of transverse support members 100 which extend between the sidewalls 99 in assembled relation to the housing 80. The sidewalls 99 are spaced apart for a distance to clear the sidewalls 82 when inserted into the housing 80. Each sidewall 99 includes a downwardly extending leg 102 extending along the end wall 84 of the housing, a stepped portion 104 terminating above the lower circulating port 91 and a recessed area 106 of inverted U-shaped configuration to receive the upper circulating port 90. Each of the insert assemblies 96 includes an upper electrode wire 108 extending between notched portions 109 in front edge 110 of the sidewalls 99 ; and a lower electrode wire 112 extends between notched portions 114 in lower leg portions 102 in the sidewalls 99 of each insert assembly. The tops 98 of the insert assemblies are dimensioned to overlie the upper edge of the housing and, when inserted into the housing, abut one another such that the leg portions 102 bear against opposite end walls 84 of the housing. Each upper electrode wire 108 is electrically connected, as in Figure 3, to a negative terminal 115 or 115′ on the top 98 of each insert assembly. In turn, the lower electrode wire 112 is electrically connected to a positive terminal 116 or 116′ on the top 98 of each insert assembly.

As seen from Figure 3, the upper electrodes 108 are spaced equidistant from the center line of the gel 28 and at a height preferably spaced slightly above the well or top surface of the gel 28. The lower, positive electrodes 112 are spaced equidistant from the center line of the gel 28 and in a horizontal plane spaced above the lower edge of the gel or base 86 of the housing. Preferably each electrode 108 and 112 is composed of a single length of platinum wire with opposite ends of the wire inserted within the notches 109 or 114 as described, and the wire is shielded where necessary at the connecting ends and from one of the notched ends to the respective terminals 115, 115′, and 116, 116′. In Figures 1 and 2, the wires extend horizontally in spaced parallel relation to the vertical, free standing gel 28. When voltages are applied alternately between each negative electrode 108 on one side of the gel 28 and each positive electrode 112 on the opposite side of the gel, electric fields are created in which the maximum strength or intensity of the fields 120 and 122 intersect the upper end of the gel and pass downwardly at an acute angle through the thickness of the gel, the angle between fields 120 and 122 being greater than orthogonal.

The increased angle between the fields achieves higher resolution than heretofore possible and is capable of separating larger molecules when subjected to voltages in the range of 200 to 250 volts. Notwithstanding the increased voltage, less current is required ; yet will separate larger molecules in the gel. For example, the included angle 123 between the maximum fields at 120 and 122 is on the order of 110° to 120°, as illustrated in Figure 3. In this relation, it is to be understood that the overall fields established pass through the entire length and breadth of the gel but are of reduced intensity in proceeding downwardly and away from the maximum fields 120 and 122.

As shown in Figure 3 and 4, the power supply 50' has negative and positive lines 52' and 54' which are connected to armatures 58' and 60', respectively, of a double pole, double throw relay 62'. Switching timer 64' is connected to a coil within the relay 62' and, when the output from the timer 64' is energized, the relay armatures 58' and 60' are closed through contacts 66' and 68' to apply negative and positive potentials via the terminals 115 and 116 to the wires 108 and 112, respectively, to establish the electrical field 120. When the output from the timer 64' is de-energized, the armatures 58' and 60' are switched to contacts 67' and 69' to cause the voltage to be applied via terminals 115' and 116' to establish the electrical field 122. Again, when the gel 28 is centered between the negative wires 108 and 112, alternating pulses are applied to each set of electrodes for equal amounts of time and in the direction of the fields 120 and 122 to cause the DNA molecules to advance in a serpentine path along the lanes from the top to the bottom of the gel 28.

Following electrophoresis, the insert assemblies 96 are removed, and the gel 28 is removed from the gel box 80 for conventional treatment before electroblotting of the DNA molecules on to a membrane or filter. In this procedure, the gel is stained with ethidium bromide so that the DNA can be fluoresced under ultraviolet light. It is then soaked in a sodium hydroxide solution to denature the DNA molecules and open up the double stranded DNAs. It is then neutralized to reduce the pH and equilibrated to remove any salt or sodium hydroxide present. The gel is then sandwiched between two surfaces, one being a membrane 130. Backing members 132 are applied to opposite planar surface of the gel and membrane, and the gel assembly is then repositioned in the housing 80 between the outer posts 88.

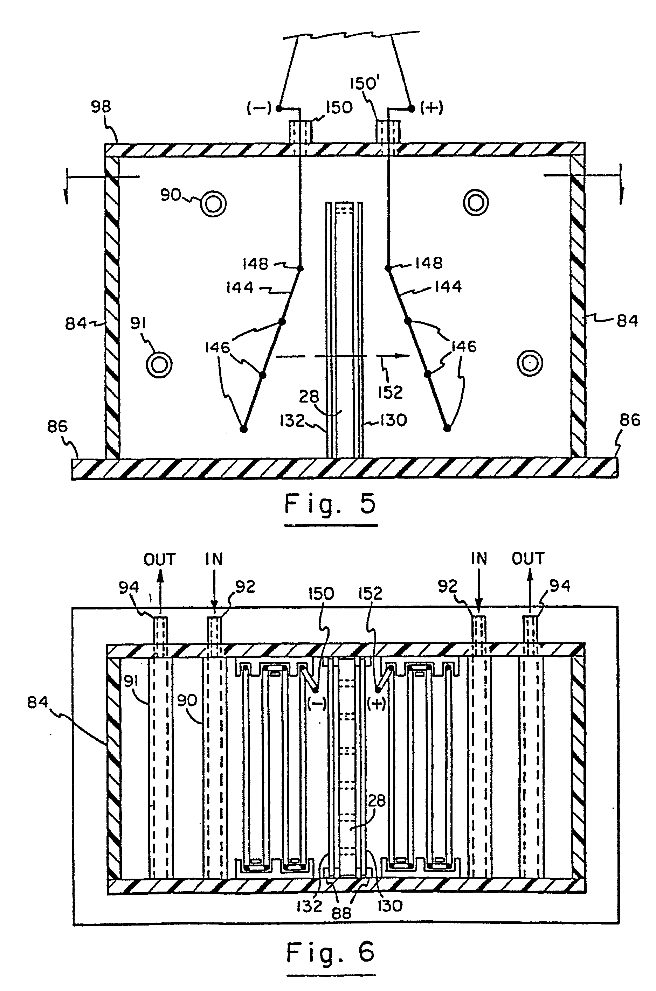

As shown in Figure 8, transfer insert assemblies 134 are placed in the gel housing 80 on opposite sides of the posts 88. Each insert assembly 134 correspondingly includes opposite sidewalls 136 of generally rectangular configuration extending downwardly from the underside of a generally rectangular top 138, the sidewalls 136 spaced inwardly of the edges of the top 138 a sufficient distance to clear the inner surfaces of the sidewalls 82 when inserted into the gel housing 80. In addition, the sidewalls 136 are positioned relatively near an inner facing end 139 of the top and relatively away from the opposite end 140. Reinforcing bars 142 extend at spaced intervals between the sidewalls 136, two of the bars 142 disposed at upper and lower ends of inclined electrode support ribs or holders 144 which protrude inwardly from opposed, inner facing surfaces of the sidewalls 136 and in aligned relation to one another. As shown in Figure 5, an electrode array 146 comprises a single length of wire which is advanced back and forth in horizontal courses between the upper and lower ends of the holders 144. The holders 144 are notched to receive diagonal segments of the wire so as to act as insulating shields along opposite ends of the stretches of wire. For consistent positioning of the insert assemblies, the tops 138 will just overlap the upper edge of the housing 80 when the sidewalls 136 are inserted into the housing with the rearward edges of the sidewalls 136 away from the posts 88 in front of the upper buffer circulating ports 90.

In Figures 5 and 6, an upper terminal end of each wire 148 is connected into a terminal 150 or 150', the terminal 150 connected to the negative side of the power supply 50' and terminal 150' connected to the positive side of the power supply 50'. As illustrated, the electrode array in each insert assembly inclines downwardly and away from the uppermost stretch of wire, and when positioned in housing 80 is spaced equidistant from the center line of the gel and creates a three-dimensional field which extends horizontally from the negative to the positive arrays shown dotted at 152. The gradual divergence of the electrode arrays 146 away from the upper end of the gel is important in order to transfer the larger DNA molecules at the upper end of the gel and, in diverging downwardly and away from the gel, establish a gradual decrease in voltage across the gel 28 from the upper to the lower end.

In the transfer procedure, the electrical field is applied in one direction only through the thickness of the gel in order to transfer the DNA molecules from the gel on to the substrate or membrane 130, the membrane 130 being positioned on one planar surface of the gel away from the negative electrode.

The buffer is recirculated through the housing to maintain a constant temperature, and the power supply 50' applies a voltage in the direction indicated across the gel assembly. Typically the voltage level is on the order of 120 volts and is applied for approximately 2 hours to assure complete transfer of the DNA molecules. The interchangeable insert assemblies 96 and 134 permit utilization of the same gel housing 80 while achieving optimum angles between the electrodes for each procedure. The electrode and wires may be mounted in separate housings by direct attachment to the holders 144 on the sidewalls 82 of the housing 80 while establishing the desired angle between the electrodes as described in Figures 1 and 2. The single electrode wire 108 for the negative electrode affords greater latitude in the choice of the angular relationship between the electric fields than the electrode array of figures 1 and 2, and the fields 120 and 122 may be varied by shifting either the negative electrode 108 or positive electrode 112 as long as the gel is centered between the electrodes and the entire fields traverse the full length of the gel. Accordingly, when the field angle 123 is increased, the length of the gel box 80 must be increased to maintain the positive electrodes 112 close enough to the lower end of the gel to assure that the fields will traverse the entire length of the gel ; and it is equally important that the maximum fields 120 and 122 intersect the upper ends of the lanes or bands containing the DNA molecules to encourage downward movement and resolution of the molecules along each lane or band. Increasing the maximum field angle 123 beyond 90° and into the range of 110° to 120° makes possible the movement or separation of larger molecules on the order of 2,000,000 base pairs. The resolution or movement of molecules larger than 2,000,000 base pairs may be achieved by increasing the maximum field angle 123 beyond 120° when combined with the appropriate adjustment or selection of voltage and pulse time.

## Claims

1. Electrophoretic separation apparatus comprising a gel matrix medium (28) for supporting macromolecular particles to be separated, said medium having first and second opposed planar surfaces separated by a thickness of medium which is small in relation to the dimension of said planar surfaces and defining a plurality of separation tracks parallel to said planar surfaces ; first and second electrode means (40-46 ; 108, 112) positioned adjacent said medium (28) for applying, upon energization, first and second electric fields (48, 50 ; 120, 122) respectively to said separation tracks ; and means (50-58 ; 50'-69') for alternately and repetitively energizing said first and second electrode means ;

characterized in that said first electrode means (40, 46 ; 108, 112) is positioned in facing relation to said opposed planar surfaces of said medium for applying said first electric field (48 ; 120) across said separation tracks in a direction which intersects both said planar surfaces and is oriented at an angle which is acute with respect to said first planar surface ; and in that said second electrode means (42, 44 ; 108, 112) is positioned in facing relation to said opposed planar surfaces of said medium for applying said second electric field (50 ; 122) across said separation tracks in a direction which intersects both said planar surfaces and is oriented at an angle which is acute with respect to said second planar surface ;

whereby an equivalent electric field can be applied to each of said separation tracks simultaneously.

2. Apparatus according to Claim 1, wherein said first and second electrode means (40-46 ; 108, 112) have maximum fields at an included angle of at least 90° to one another.

3. Apparatus according to Claim 2, wherein said first and second electrode means (40-46 ; 108, 112) have maximum fields at an included angle of from 90° to 120° to one another.

4. Apparatus according to any preceding claim, wherein said first and second electrode means each comprises a negative electrode (40, 42 ; 108) disposed adjacent to a first of said planar surfaces of said medium (28) and a positive electrode (44, 46 ; 112) disposed opposite to the second of said opposed planar surfaces of said medium (28), the distance between each said positive electrode (44, 46, 112) and said medium (28) being greater than the distance between each said negative electrode (40, 42 ; 108) and said medium (28).

5. Apparatus according to any preceding claim, wherein said medium (28) is a gel-like planar substance through which said particles may move and has sufficient physical rigidity to be free standing, and wherein said first and second electrode means (40-46) each comprises a multi-conductor, substantially planar array adjacent to one of said planar surfaces of said medium (28) and an oppositely poled electrode positioned adjacent to the other of said planar surfaces of said medium (28).

6. Apparatus according to any preceding claim, wherein said first and second electric fields (48, 50 ; 120, 122) extend in a downward angular direction through the thickness of said medium (28) between the opposite ends of said separation tracks, and wherein said first and second electrode means (40-46 ; 108, 112) comprise negative and positive electrodes each defined by at least one wire extending horizontally in spaced parallel relation to said medium (28).

7. Apparatus according to any preceding claim, and including a common housing (80) having medium support means (87) for removably supporting said medium (28) symmetrically between said negative and positive electrodes, electrode support means (96) for removably supporting said first and second electrode means (40-46 ; 108, 112) in said housing (80), and means (134) for removably positioning transfer electrode means (146) in said housing, following removal of said first and second electrode means, for applying upon energization a uni-directional field across said medium (28), said transfer electrode means (146) being operative to apply a progressively reduced voltage drop across said medium (28) from one end to the opposite end of said medium.

8. Apparatus according to Claim 7, wherein said transfer electrode means (146) includes positive and negative electrodes (146) each in the form of a multi-conductor array diverging downwardly and away from said planar surfaces of said medium (28).

9. An electrophoretic method of separating macromolecular particles by alternately and repetitively applying first and second electric fields in different directions to a planar gel matrix to which said macromolecular particles have been applied so as to be separated in a plurality of separation tracks running parallel to said gel matrix,

characterized in that said first electric field is applied across said separation tracks in a direction which intersects both planar surfaces of said gel matrix and is oriented at an angle which is acute with respect to one of said planar faces of said gel matrix, and in that said second electric field is applied across said separation tracks in a direction which intersects both planar surfaces of said gel matrix and is oriented at an angle which is acute with respect to the other of said planar faces of said gel matrix,

whereby an equivalent electric field is applied to each of said separation tracks simultaneously.

10. A method according to Claim 9, in which the included angle between said first and second electric fields is at least 90°.

11. A method according to Claim 9 or Claim 10, and including the further steps, following completion of the electrophoretic separation, of
(a) applying a substrate to one planar surface of said matrix ; and
(b) exposing said matrix to an electric field extending across said matrix in a direction causing said macromolecular particles in said separation tracks to be transferred from said tracks onto said substrate.

## Ansprüche

1. Elektrophoresegerät bestehend aus einem zum Tragen der zu trennenden makromolekularen Teilchen verwendeten Gel-Matrixmedium (28), das erste und zweite entgegengesetzte planare Oberflächen aufweist, die durch eine Dicke des Mediums getrennt sind, die klein ist im Verhältnis zur Abmessung der planaren Oberflächen und durch die mehrere Trennungsspuren parallel zu den Oberflächen bestimmt werden, aus einer ersten und einer zweiten Elektrodeneinheit (40-46 ; 108, 112), die nächstliegend zum Medium (28) angeordnet sind, um auf die Erregung ein erstes und ein zweites elektrisches Feld (48, 50 ; 120, 122) an die jeweiligen Trennungsspuren anzulegen, und aus einer Einrichtung (50-58 ; 50'-69') zum Erregen der ersten bzw. der zweiten Elektrodeneinheit, dadurch gekennzeichnet, daß die erste Elektrodeneinheit (40, 46 ; 108, 112) in gegenüberliegender Ausrichtung zu den entgegengesetzten planaren Oberflächen des Mediums zum Anlegen des ersten elektrischen Feldes (48, 120) über den Trennungsspuren in einer Richtung angeordnet ist, die die beide planare Oberflächen schneidet und in Bezug zur ersten planaren Oberfläche in einem spitzen Winkel verläuft, und daß die zweite Elektrodeneinheit (42, 44 ; 108, 112) in gegenüberliegender Ausrichtung zu den entgegengesetzten planaren Oberflächen des Mediums zum Anlegen des zweiten elektrischen Feldes (50 ; 122) über den Trennungsspuren in einer Richtung angeordnet ist, die beide planare Oberflächen schneidet und in Bezug zur zweiten planaren Oberfläche in einem spitzen Winkel verläuft, wobei ein gleichwertiges elektrisches Feld gleichzeitig an jede der Trennungsspuren angelegt werden kann.

2. Elektrophoresegerät nach Anspruch 1, dadurch gekennzeichnet, daß die erste und zweite Elektrodeneinheit (40-46 ; 108, 112) maximale Felder bei einem gegenseitig eingeschlossenen Winkel von zumindest 90° besitzen.

3. Elektrophoresegerät nach Anspruch 2, dadurch gekennzeichnet, daß die erste und zweite Eletrodeneinheit (40-46 ; 108, 112) maximale Felder bei einem gegenseitig eingeschlossenen Winkel von 90° bis 120° besitzen.

4. Elektrophoresegerät nach einem der vorhergehenden Ansprüche 1 bis 3, dadurch gekennzeichnet, daß die erste und die zweite Elektrodeneinheit eine negative Elektrode (40, 42 ; 108), die nächstliegend an einer ersten der planaren Oberflächen des Mediums (28) angeordnet ist, und eine positive Elektrode (44, 46 ; 112) aufweisen, die der zweiten der planaren Oberflächen des Mediums (28) gegenüberliegend angeordnet ist, wobei der Abstand zwischen jeweils der positiven Elektrode (44, 46 ; 112) und dem Medium (28) größer ist als der Abstand zwischen jeweils der negativen Elektrode (40, 42 ; 108) und dem Medium (28).

5. Elektrophoresegerät nach einem der vorhergehenden Anpsrüche 1 bis 4, dadurch gekennzeichnet, daß das Medium (28) eine gelartige planare Substanz ist, durch die sich die Teilchen hindurch bewegen können und die eine zum freien Stehen hinreichende physikalische Steifheit besitzt, und daß die erste und die zweite Elektrodeneinheit (40-46) jeweils eine allgemein planare Mehrfachleitergruppierung nächstliegend an einer der planaren Oberflächen des Mediums (28) und eine entgegengesetzt gepolte Elektrode besitzen, die nächstliegend an der anderen der planaren Oberflächen des Mediums (28) angeordnet ist.

6. Elektrophoresegerät nach einem der vorhergehenden Ansprüche 1 bis 5, dadurch gekennzeichnet, daß das erste und das zweite elektrische Feld (48, 50 ; 120, 122) sich in einer nach unten verlaufenden Winkelrichtung durch die Dicke des Mediums (28) zwischen den entgegengesetzten Enden der Trennungsspuren erstrecken und daß die erste und zweite Elektrodeneinheit (40-46 ; 108, 112) negative und positive Elektroden aufweisen, die durch zumindest einen Draht festgelegt sind, der sich in einem parallel zum Medium (28) gehaltenen Abstand horizontal erstreckt.

7. Elektrophoresegerät nach einem der vorhergehenden Ansprüche 1 bis 6, **gekennzeichnet** durch ein gemeinsames Gehäuse (80) mit einer Mediumträgereinrichtung (87) zum entfernbaren Tragen des Mediums symmetrisch zwischen der negativen und der positiven Elektrode, eine Elektrodenträgereinrichtung (96) zum entfernbaren Tragen der ersten und zweiten Elektrodeneinheiten (40-46 ; 108, 112) im Gehäuse (80) und eine Einrichtung (134) zum entfernbaren Anordnen der Transferelektrodeneinrichtung (146) im Gehäuse auf das Entfernen der ersten und zweiten Elektrodeneinheit, um auf die Erregung ein in einer Richtung laufendes Feld über dem Medium (28) anzulegen, wobei die Transferelektrodeneinrichtung (146) wirksam wird, einen fortschreitend verringerten Spannungsabfall über dem Medium (28) von einem Ende zum gegenüberliegenden Ende des Mediums anzulegen.

8. Elektrophoresegerät nach Anspruch 7, dadurch **gekennzeichnet**, daß die Transferelektrodeneinrichtung (146) eine positive und eine negative Elektrode (146) jeweils in Form einer Mehrleitergruppierung umfaßt, das nach unten sowie von den planaren Oberflächen des Mediums (28) weg divergiert.

9. Elektrophoretisches Verfahren zum Trennen makromolekularer Teilchen durch wechselndes und wiederholtes Anlegen eines ersten und eines zweiten elektrischen Feldes in unterschiedlichen Richtungen zu einer planaren Gel-Matrix, an die die makromolekularen Teilchen gegeben wurden, um in eine Vielzahl von parallel zur Gel-Matrix verlaufenden Trennungsspuren getrennt zu werden, dadurch **gekennzeichnet**, daß das erste elektrische Feld über den Trennungsspuren in einer Richtung angelegt wird, die beide planare Oberflächen der Gel-Matrix schneidet und in Bezug zu der einen der planaren Flächen der Gel-Matrix in einem spitzen Winkel ausgerichtet ist, und daß das zweite elektrische Feld über den Trennungsspuren in einer Richtung angelegt wird, die beide planare Oberflächen der Gel-Matrix schneidet und in Bezug zu der anderen der planaren Flächen der Gel-Matrix in einem spitzen Winkel ausgerichtet ist, wobei ein gleichwertiges elektrisches Feld gleichzeitig an jede der Trennungsspuren angelegt wird.

10. Verfahren nach Anspruch 9, dadurch **gekennzeichnet**, daß der eingeschlossene Winkel zwischen dem ersten und dem zweiten elektrischen Feld zumindest 90° beträgt.

11. Verfahren nach einem der vorhergehenden Ansprüche 9 oder 10, das nach Vollendung der elektrophoretischen Trennung **gekennzeichnet** ist durch

(a) Antragen eines Substrats an eine planare Oberfläche der Matrix und

(b) Aussetzen der Matrix einem elektrischen Feldes, das sich über die Matrix in einer Richtung erstreckt, wodurch die makromolekularen Teilchen in den Trennungsspuren veranlaßt werden, sich von den Spuren auf das Substrat überführen zu lassen.

## Revendications

1. Appareil de séparation par électrophorèse, comprenant un milieu (28) sous forme d'un gel destiné à supporter les particules macromoléculaires à séparer, le milieu ayant une première et une seconde faces planes opposées séparées par l'épaisseur du milieu qui est faible par rapport à la dimension des surfaces planes, et délimitant plusieurs pistes de séparation qui sont parallèles aux surfaces planes, un premier et un second dispositif à électrode (40-46 ; 108, 112) placés près du milieu (28) et destinés, lors de l'excitation, à appliquer un premier et un second champ électrique (48, 50 ; 120, 122) aux pistes de séparation, et un dispositif (50, 58 ; 50'-69') destiné à exciter en alternance et de façon répétée le premier et le second dispositif à électrode,

caractérisé en ce que le premier dispositif à électrode (40, 46 ; 108, 112) est disposé en face des surfaces planes opposées du milieu afin que le premier champ électrique (48 ; 120) soit appliqué transversalement aux pistes de séparation dans une direction qui recoupe les deux surfaces planes et qui fait un angle aigu avec la première surface plane, et en ce que le second dispositif à électrode (42, 44 ; 108, 112) est placé en face des surfaces planes opposées du milieu afin qu'il applique le second champ électrique (50 ; 122) transversalement aux pistes de séparation dans une direction qui recoupe les surfaces planes et qui fait un angle aigu avec la seconde surface plane,

si bien qu'un champ électrique équivalent peut être appliqué simultanément à chaque piste de séparation.

2. Appareil selon la revendication 1, dans lequel le premier et le second dispositif à électrode (40-46 ; 108, 112) ont des champs maximaux formant un angle inclus au moins égal à 90°.

3. Appareil selon la revendication 2, dans lequel le premier et le second dispositif à électrode (40-46 ; 108, 112) ont des champs maximaux déterminés pour un angle inclus compris entre 90 et 120° l'un avec l'autre.

4. Appareil selon l'une quelconque des revendications précédentes, dans lequel le premier et le second dispositif à électrode comprennent chacun une électrode négative (40, 42 ; 108) placée près d'une première surface plane du milieu (28) et une électrode positive (44, 44 ; 112) placée en face de la seconde surface plane opposée du milieu (28), la distance comprise entre chaque électrode positive (44, 46 ; 112) et le milieu (28) étant supérieure à la distance comprise entre chaque électrode négative (40, 42 ; 108) et le milieu (28).

5. Appareil selon l'une quelconque des revendications précédentes, dans lequel le milieu (28) est une substance plane analogue à un gel dans laquelle les particules peuvent se déplacer et possède une rigidité physique suffisante pour être cohérent, et dans lequel le premier et le second dispositif à électrode (40-46) comportent chacun un ensemble sensiblement plan à plusieurs conducteurs adjacent à l'une des surfaces planes du milieu (28) et une électrode de polarité opposée placée à proximité de l'autre surface plane du milieu (28).

6. Appareil selon l'une quelconque des revendications précédentes, dans lequel le premier et le second champ électrique (48, 50 ; 120, 122) sont inclinés vers le bas dans l'épaisseur du milieu (28) entre les extrémités opposées des pistes de séparation, et le premier et le second dispositif à électrode (40-46 ; 108, 112) comportent des électrodes négative et positive formées chacune par au moins un fil placé horizontalement, parallèlement au milieu (28) et à distance de celui-ci.

7. Appareil selon l'une quelconque des revendications précédentes, comprenant un boîtier commun (80) ayant des dispositifs (87) de support du milieu destinés à supporter temporairement le milieu (28) symétriquement entre les électrodes négative et positive, un dispositif (96) de support d'électrodes destiné à supporter temporairement le premier et le second dispositif à électrode (40-46 ; 108, 112) dans le boîtier (80), et un dispositif (134) destiné à positionner temporairement un dispositif (146) à électrodes de transfert dans le boîtier, après l'extraction du premier et du second dispositif à électrode, afin que son excitation assure l'application d'un champ unidirectionnel transversalement au milieu (28), le dispositif (146) à électrodes de transfert étant destiné à appliquer une chute de tension qui diminue progressivement dans le milieu (28) d'une extrémité à l'extrémité opposée du milieu.

8. Appareil selon la revendication 7, dans lequel le dispositif (146) à électrodes de transfert comprend des électrodes positive et négative (146) qui sont chacune sous forme d'un ensemble à plusieurs conducteurs divergeant vers le bas et s'écartant des surfaces planes du milieu (28).

9. Procédé de séparation de particules macromoléculaires par électrophorèse, par application répétée et en alternance d'un premier et d'un second champ électrique dans des directions différentes à un milieu plan sous forme d'un gel auquel les particules macromoléculaires ont été appliquées afin qu'elles soient séparées dans plusieurs pistes de séparation disposées parallèlement au milieu sous forme d'un gel, caractérisé en ce que le premier champ électrique est appliqué transversalement aux pistes de séparation dans une direction qui recoupe les deux surfaces planes du gel et qui fait un angle aigu avec l'une des faces planes du gel, et en ce que le second champ électrique est appliqué transversalement aux pistes de séparation dans une direction qui recoupe les deux surfaces planes du gel et qui fait un angle aigu avec l'autre des faces planes du gel, si bien qu'un champ électrique équivalent est appliqué simultanément à chaque piste de séparation.

10. Procédé selon la revendication 9, dans lequel l'angle inclus du premier et du second champ électrique est au moins égal à 90°.

11. Procédé selon la revendication 9 ou 10, comprenant après la fin de la séparation par électrophorèse, les étapes suivantes :

(a) l'application d'un substrat sur une surface plane du milieu, et

(b) l'exposition du milieu à un champ électrique transversal au milieu, dans un sens qui provoque le transfert des particules macromoléculaires des pistes de séparation de ces pistes au substrat.

POWER — 50

— 52   54 —

58   60   62

TIMER

64   66   67   72   74   76   14   10

70

(+)   (−)   (−)   (+)

A   15   A

IN   18   IN   16

26   40   30   42   28   12

24   50   48

20   44   46   22

OUT   OUT

Fig. 1

32   12

44   46

40   30   42

28

32

Fig. 2

Fig. 3

Fig. 4

Fig. 5

Fig. 6

# Fig. 7

# Fig. 8